# EUROPEAN PATENT APPLICATION

(11) **EP 4 462 093 A2**
(43) Date of publication of application: **13.11.2024**
(21) Application number: 24161101.1
(22) Date of filing: 04.03.2024
(51) Int. Cl.: G01J 5/00, G01J 5/02, G01J 5/04, G01J 5/06, G01J 5/08, G01J 5/48, G01N 25/72, B60L 3/00, H01M 10/48, G01J 5/0806

(54) **IMAGING DEVICE FOR GENERATING A THERMAL IMAGE OF A SURFACE**

(30) Priority: 22.03.2023 IN 202311019742
(71) Applicant: Honeywell International Inc., Charlotte, NC 28202 (US)
(72) Inventor: JAYAKUMAR, Prince Ashwin Kumar Anburaj, Charlotte, 28202 (US); RAM, Bharath, Charlotte, 28202 (US)
(74) Representative: Haseltine Lake Kempner LLP

(57) **Abstract**

Methods, apparatuses and systems for imaging a battery pack is disclosed herein. An example imaging device may include an infrared sensor configured to sense reflected infrared radiation from an imaging area. The imaging device may include a prism configured to form an infrared image of a surface of the battery pack on the imaging area. A thermal map of the surface may be generated and used for determining a battery cell with a temperature that may indicate a thermal runaway. A fuse electronically coupled to the battery cell may be cut off to prevent and/or mitigate a hazardous condition for the battery.

## Description

### BACKGROUND

An overheated battery cell in a battery pack may lead to hazardous consequences. For example, the overheated battery cell may cause s thermal runaway in the battery pack.

Applicant has identified many technical challenges and difficulties associated with detecting and sensing an overheated battery cell in a battery pack. Through applied effort, ingenuity, and innovation, Applicant has solved problems related to detecting and sensing the overheated battery cell in the battery pack and taking steps to reduce hazardous consequences by developing solutions embodied in the present disclosure, which are described in detail below.

### BRIEF SUMMARY

Various embodiments described herein relate to methods, apparatuses, and systems for imaging.

An imaging device is provided in accordance with various embodiments of the present disclosure. In various embodiments, the imaging device comprises an infrared sensor configured to sense reflected infrared radiation from an imaging area; a first prism configured to: receive a first infrared radiation emitted from an object, wherein the first infrared radiation is received from a first part of a field of view; and reflect the first infrared radiation to the imaging area; a second prism configured to: receive a second infrared radiation emitted from the object, wherein the second infrared radiation is received from a second part of the field of view; and reflect the second infrared radiation to the imaging area, wherein the infrared sensor is located between the object and the imaging area.

In various embodiments, the first part of the field of view and the second part of the field of view cover a surface of the entire object facing the infrared sensor. In various embodiments, the first prism and the second prism are configured to form an infrared image of the surface of the object on the imaging area.

In various embodiments, the imaging device comprises a controller configured to generate a thermal map of the surface using the sensed reflected infrared radiation from the imaging area, the thermal map comprising temperature value for each pixel of the infrared image. In various embodiments, the object is a battery pack of an electrical vehicle, and the controller configured to, for each battery cell of the battery pack: group pixels corresponding to the battery cell; and determine a battery cell temperature corresponding to the battery cell using temperature values for each pixel in the grouped pixels corresponding to the battery cell.

In various embodiments, the first part of the field of view and the second part of the field of view cover a reference area, wherein the reference area is configured to maintain a reference temperature approximately similar to a surrounding temperature of the battery pack. In various embodiments, the controller is configured to determine a location of the battery cell, when the battery cell temperature rises above the reference temperature by a threshold.

In various embodiments, the controller is configured to: determine a power level for a heat generating radiation; direct a source of the heat generating radiation to the battery cell; and instruct the source to emit the heat generating radiation at the power level, such that when a fuse of the battery cell receives the heat generating radiation, the fuse disconnects the battery cell from a power grid of the battery pack.

In various embodiments, the power level is determined such that the fuse temperature rises to a fuse cutoff temperature. In various embodiments, the source is configured to rotate across a first source axis and a second source axis, wherein the first source axis is approximately perpendicular to the second source axis and the first and second source axes are approximately parallel to the surface of the battery pack, wherein directing the source to the battery cell comprises causing the source to rotate around the first or second axes.

In various embodiments, the source is configured to move in two dimensions in a plane approximately parallel to the surface of the battery pack, wherein directing the source to the battery cell comprises moving the source in the plane to a proximity of the battery cell.

In various embodiments, the heat generating radiation comprises any of laser and xenon flash.

Various embodiments of the present disclosure provide a system for preventing a thermal runaway in a battery pack. In various embodiments, the system comprises an infrared imaging device configured to generate a thermal map of battery cells of the battery pack, wherein the thermal map comprises temperature information for each battery cell of the battery pack; a source of a heat generating radiation, the source configured to direct the heat generating radiation to any of the battery cells of the battery pack; and a controller configured to: determine a location of a battery cell when the battery cell temperature is above a reference temperature by a threshold; and direct the source of the heat generating radiation to the battery cell.

In various embodiments, the controller is configured to determine a power level for a heat generating radiation; and instruct the source to emit the heat generating radiation at the power level, such that when a fuse of the battery cell receives the heat generating radiation, the fuse disconnects the battery cell from a power grid of the battery pack. In various embodiments, the power level is determined so that the fuse temperature rises to a fuse cutoff temperature.

In various embodiments, the source is configured to rotate across a first source axis and a second source axis, wherein the first source axis is approximately perpendicular to the second source axis and the first and second source axes are approximately parallel to a surface of the battery pack facing the infrared imaging device, wherein directing the source to the battery cell comprises causing the source to rotate around the first or second axes.

In various embodiments, the source is configured to move in two dimensions in a plane approximately parallel to the surface of the battery pack, wherein directing the source to the battery cell comprises moving the source in the plane to a proximity of the battery cell.

In various embodiments, the infrared imaging device comprises an infrared sensor configured to sense reflected infrared radiation from an imaging area; a first prism configured to: receive a first infrared radiation emitted from an object, wherein the first infrared radiation is received from a first part of a field of view; and reflect the first infrared radiation to the imaging area; a second prism configured to: receive a second infrared radiation emitted from the object, wherein the second infrared radiation is received from a second part of the field of view; and reflect the second infrared radiation to the imaging area, wherein the infrared sensor is located between the object and the imaging area.

Various embodiments of the present disclosure provide an imaging device. In various embodiments, the imaging device comprises an infrared sensor configured to sense reflected infrared radiation from an imaging area; a first prism configured to: receive a first infrared radiation emitted from an object, wherein the first infrared radiation is received from within a field of view; and reflect the first infrared radiation to the imaging area; a micro electromechanical system (MEMS) configured to rotate the first prism to scan the entire field of view, wherein the field of view cover a surface of the entire object facing the infrared sensor.

In various embodiments, the first prism is configured to rotate along an axis parallel to the surface of the object facing the infrared sensor and form an infrared image of the surface of the object on the imaging area.

The foregoing illustrative summary, as well as other exemplary objectives and/or advantages of the disclosure, and the manner in which the same are accomplished, are further explained in the following detailed description and its accompanying drawings.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1 illustrates an example schematic diagram depicting a battery 100 as used in the prior art;
FIG. 2 illustrates a diagram illustrating temperature variation of a battery as presented in the prior art;
FIG. 3 is a schematic diagram illustrating an imaging device in accordance with various embodiments of the present disclosure;
FIG. 4A is a schematic diagram illustrating an imaging device in accordance with various embodiments of the present disclosure;
FIG. 4B is a schematic diagram illustrating a battery cell in accordance with various embodiments of the present disclosure;
FIG. 4C is a schematic diagram illustrating a pixel array in accordance with various embodiments of the present disclosure;
FIG. 5 is a schematic diagram illustrating an imaging device in accordance with various embodiments of the present disclosure;
FIG. 6 is a schematic diagram illustrating a controller in accordance with various embodiments of the present disclosure;
FIG. 7 is a flowchart diagram illustrating example operations in accordance with various embodiments of the present disclosure; and
FIG. 8 is a flowchart diagram illustrating example operations in accordance with various embodiments of the present disclosure.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

The components illustrated in the figures represent components that may or may not be present in various embodiments of the present disclosure described herein such that embodiments may include fewer or more components than those shown in the figures while not departing from the scope of the present disclosure. Some components/aspects may be omitted from one or more figures or shown in dashed line for visibility, clarity, and/or illustrative purposes.

The phrases "in an example embodiment," "some embodiments," "various embodiments," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such components or features may be optionally included in some embodiments, or may be excluded.

The terms "electronically coupled" or "in electronic communication with" in the present disclosure refer to two or more electrical elements (for example, but not limited to, a controller, imaging device, sensor, battery cell, fuse, power grid, an example processing circuitry, communication module, input/output module, memory) and/or electric circuit(s) being connected through wired means (for example but not limited to, conductive wires or traces) and/or wireless means (for example but not limited to, wireless network, electromagnetic field), such that data and/or information (for example, electronic indications, signals) may be transmitted to and/or received from the electrical elements and/or electric circuit(s) that are electronically coupled.

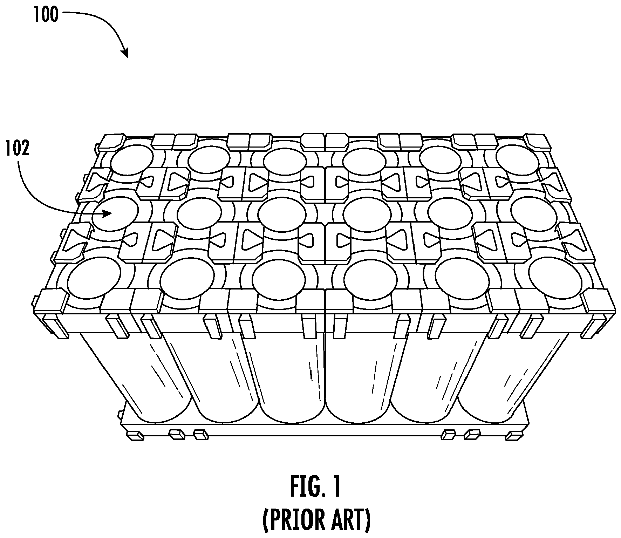

Referring to FIG. 1 a schematic diagram illustrating a battery 100 is provided in accordance with the prior art. Batteries may be used in various applications such as powering an electric vehicle, a robot, various appliances or electronic devices, power storage, etc. A battery may be a battery pack including one or more battery cell. For example, battery 100 may include a battery cell 102.

Battery cells may be subject to physical, thermal, and/or electrical abuse. A physical abuse of a battery may by cause by a physical impact by another object, excessive force or pressure on the packaging of the battery, etc. A thermal abuse of a battery may be cause by an exposure of the battery to high temperatures. An electrical abuse of the battery may result from providing power to a high load.

Any of the physical, thermal, and/or electrical abuse may cause the battery to enter a thermal runaway state. A thermal runaway may be caused by a chain reaction causing heat and/or fire starting at one battery cell spreading rapidly to the other battery cells. For example, the thermal runaway may occur when the heat release rate from the chain reaction is larger than the cooling rate of the battery. When thermal runaway occurs, the battery may rapidly release large amounts of heat and/or release flammable and/or toxic materials. It is therefore desirable to prevent thermal runaway and detect any condition that may trigger thermal runaway at an early stage.

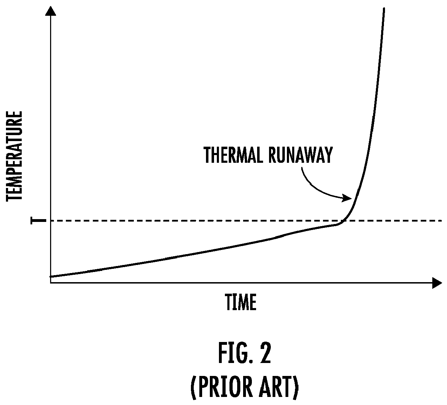

Referring now to FIG. 2 a diagram illustrating variation of a temperature of a battery is provided in accordance with an example presented in the prior art. When the thermal runaway occurs, the temperature of the battery may rapidly increase from a temperature T at the start of the thermal runaway event. Various embodiments of the present disclosure provide methods, systems, and devices to prevent a thermal runaway from occurring in a battery pack.

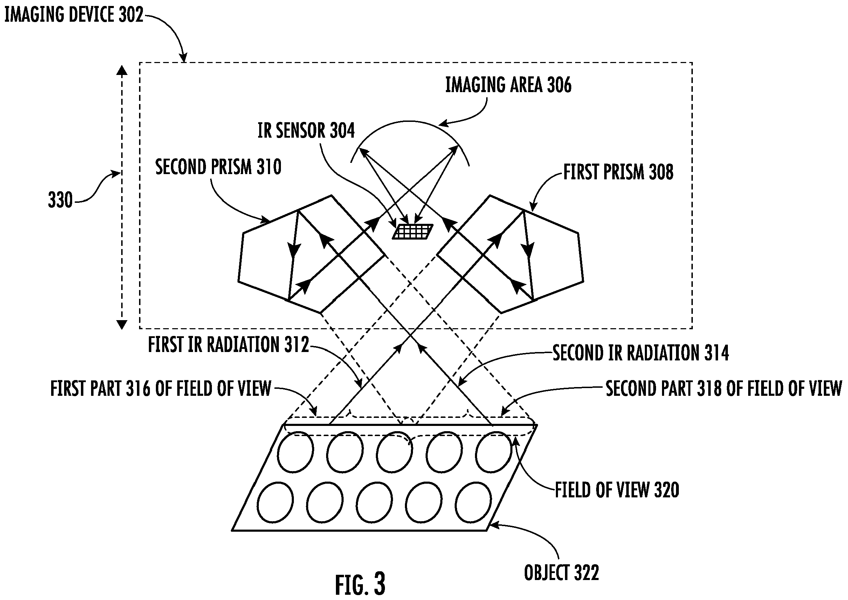

Referring now to FIG. 3 a schematic diagram illustrating various aspects of an imaging device 302 is provided in accordance with various embodiments of the present disclosure. In various embodiments, the imaging device 302 includes an infrared (IR) sensor 304. The infrared sensor 304 may be an IR sensor array arranged in two dimensions. In various embodiments, the IR sensor 304 is configured to sense reflected IR radiation from an imaging area 306.

In various embodiments, the imaging area is an area configured to reflect IR radiations to the IR sensor 304. For example, the imaging area may include any of aluminum, aluminum foil, gold, and/or any other IR reflecting material. In various embodiments, the imaging area 306 is a curved imaging area. For example, the imaging area has any of a partial spherical and/or oval shape. In various embodiments, the IR sensor 304 is placed at a focal point of a curved imaging area 306. In example embodiments, a curved imaging area 306 reflects and focuses IR radiation to the IR sensor 306.

In various embodiments, the imaging device 302 includes a first prism 308. In various embodiments, the first prism 308 is configured to receive a first infrared radiation 312 emitted from an object 322. In various embodiments, the first infrared radiation is received from a first part 316 of a field of view 320. In various embodiments, the first prism 308 is configured to reflect the first infrared radiation to the imaging area 306.

In various embodiments, the imaging device 302 includes a second prism 310. In various embodiments, the second prism 310 is configured to receive a second infrared radiation 314 emitted from the object 322. In various embodiments, the second infrared radiation 314 is received from a second part 318 of the field of view. In various embodiments, the second prism 310 is configured to reflect the second infrared radiation to the imaging area.

In various embodiments, any of the first and/or second prisms may be penta prisms. In various embodiments, various other types of prisms may be used. For example, any prism and/or optical component that provide about 90 degrees change in the direction of a radiation beam may be used. In various embodiments, the first and second prisms are made from transparent and/or translucent material. For example, the first and/or second prisms are made from any of glass, plastic, rock salt, etc.

In various embodiments, the IR sensor 304 is located between the object and the imaging area. In various embodiments, the sensitive area of the IR sensor 304 faces away from the object. In various embodiments, the sensitive area of the IR sensor faces the imaging area 306. In various embodiments, the reflecting surface of the imaging area 306 faces the object 322. In various embodiments, the IR sensor 304 is located between the first and second prisms, for example in the relative arrangements and/or direction(s) similar to the arrangement illustrated in FIG. 3.

In example embodiments, the relative arrangement(s) and/or direction(s) of the IR sensor 304 placed with its sensitive area facing the imaging area, locating the first and/or the second prisms to reflect radiation from the object to the imaging area, and the imaging area located such that it reflect the radiation back to the sensitive surface of the IR sensor placed between the imaging area and the object, provide for a more compact imaging device. For example, a height 330 of the imaging device 302 may be reduced. For example, the arrangement(s) and/or direction(s) of the components as describe herein provide for placing the imaging device between the object 322 and a cover, where a space between the object and the cover is scarce and/or limited. Therefore, various embodiments presented herein may for example provide higher efficiency in utilizing a valuable space between the object and a cover.

In various embodiments, the first part 316 of the field of view 320 and the second part 318 of the field of view 320 cover a surface of the entire object 322 facing the infrared sensor. For example, the first and second parts of the field of view cover the entirety of a top surface of the object 322. In various embodiments, the first part 316 and the second part 318 of the field of view 320 may overlap. In various embodiments, the first part 316 and the second part 318 of the field of view 320 do not overlap.

In various embodiments, the first prism and the second prism are configured to form an infrared image of the surface of the object on the imaging area. For example, by reflecting the IR radiations from the surface of the object 322 to the imaging device, an infrared image of the surface of the object is formed on the imaging area.

In various embodiments, the object 322 is a battery pack. For example, the battery pack may be used in an electric vehicle, in an electrical apparatus, in a power storage for a building and/or power storage for an electrical grid, etc. In various examples, a battery pack includes battery cells.

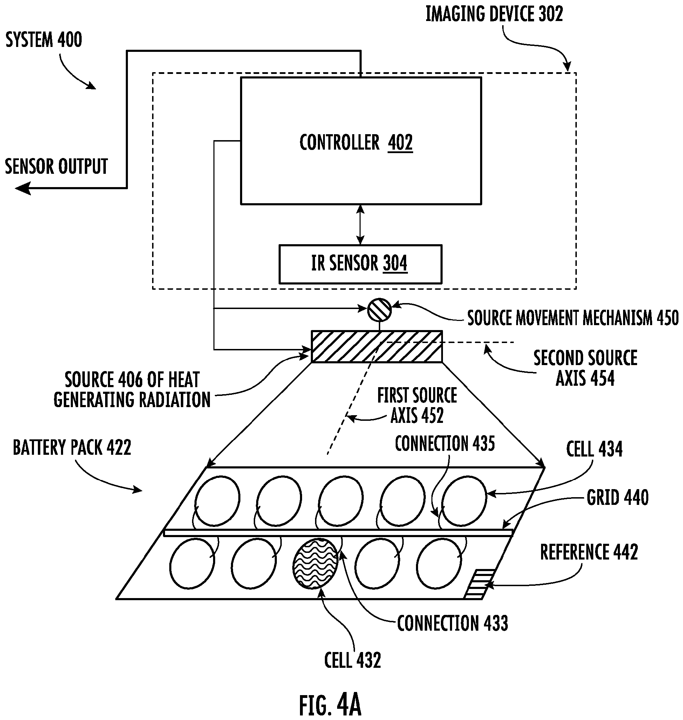

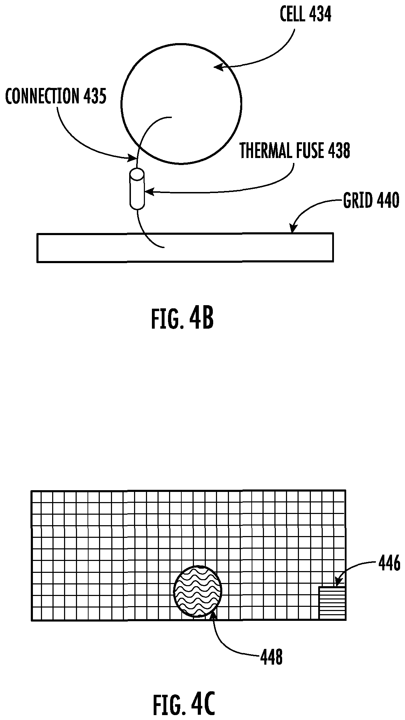

Referring now to FIG. 4 a schematic diagram illustrating various aspects of a system 400 is provided in accordance with various embodiments of the present disclosure. In various embodiments, the system 400 may be an imaging system configured to detect an overheated battery cell in a battery pack and prevent the battery pack from entering a thermal runaway and/or other hazardous conditions.

In various embodiments, the system 400 includes an imaging device. For example, the imaging system 400 includes the imaging device 302 with reference to FIG. 3. It is noted that various other components of the imaging device (e.g. the imaging area and the prisms) are not shown in the schematic diagram of FIG. 4A. In various embodiments, the imaging device includes a controller 402. It is noted that in various embodiments, the controller 402 may be external to and separate and distinct from the imaging device and may be in electronic communications with the imaging device. The controller 402 may be configured to generate a thermal map 404 of the surface as for example illustrated in the schematic diagram of FIG. 4C. In various embodiments, the controller generates the thermal map 404 using the sensed reflected infrared radiation from the imaging area 306. In various embodiments, the thermal map includes temperature value for each pixel of the infrared image. For example, each pixel of the IR sensor 304 senses the IR reflection corresponding to a specific area on the surface of the object 322. In example embodiments, using the intensity of a sensed IR radiation, the controller 402 determines a temperature of each area on the surface of the object 322 corresponding to each pixel. In various embodiments, using the temperature of the various areas, the controller 402 generates a map of the surface of the object 322 illustrating a temperature for each area.

In various embodiments, the object 322 is a battery pack of an electrical vehicle. In various embodiments, the battery pack includes one or more battery cells. For example, the battery pack may include battery cells as illustrated in the example schematic diagram of FIG. 4A, such as battery cell 432 and battery cell 434. In various embodiments, the battery pack includes a power grid, such as a power grid 440. In various embodiments, one or more battery cells are electronically coupled to the power grid 440 using various electric connections. For example, the battery cell 432 may be electronically coupled to the power grid 440 using an electric connection 433, and the battery cell 434 may be electronically coupled to the power grid 440 using an electric connection 435.

In various embodiments, the battery pack 422 includes one or more fuses each corresponding to a battery cell of the battery pack and electronically coupled to the battery cell and the power grid. In various embodiments, the fuse corresponding to each battery cell may be electronically coupled to the corresponding electric connection between the battery cell and the power grid. For example, referring to FIG. 4B, a fuse 438 corresponding to the battery cell 434 electronically couples the battery cell 434 with the power grid 440. For example, the fuse 438 electronically couples the battery cell 434 to the power grid 440 using the electric connection 435.

In various embodiments, the one or more fuses of the battery pack are thermal fuses. In various embodiments, the one or more fuses are pyro fuses. In various embodiments, a fuse is configured to disconnect its corresponding battery cell from the power grid when a temperature of the fuse rises above a fuse cutoff temperature. In various embodiments, when a temperature of a battery cell rises above a certain level, it may cause its corresponding fuse to reach the cutoff temperature and disconnect the battery cell from the power grid. In example embodiments, by disconnecting a battery with high temperature from the power gird, a current flow to or form the battery and consequently the rise in the temperature of the battery cell stops and the battery pack is protected from entering thermal runaway.

In various embodiments, the controller 402 is configured to, for each battery cell of the battery pack, group pixels corresponding to the battery cell. For example, referring to FIG. 4C, pixels 448 corresponding to the battery cell 432 may be grouped together. In various embodiments, the controller 402 is configured to determine a battery cell temperature corresponding to the battery cell using temperature values for each pixel in the grouped pixels corresponding to the battery cell. For example, the controller may use any of an average, weighted average, and/or any combination of the temperature values for the pixels corresponding to a battery cell to determine the battery cell's temperature.

In various embodiments, the field of view of the imaging device 302, which includes the first and second fields of views, cover a reference area on the surface of the object 322. For example, when the object 322 is a battery pack, a reference area 442 may for example be an area of a packaging of the battery pack, an area in proximity of the battery pack on the chassis of an electric vehicle using the battery pack, etc. In various embodiments, the reference area is configured to maintain a reference temperature approximately similar to a surrounding temperature and/or ambient temperature of the battery pack.

In various embodiments, when a temperature of a battery cell rises above a reference temperature by a threshold, the controller determines a location of the battery cell in the battery pack. In example embodiments, the reference temperature may vary between an operational range of the battery depending on the environmental condition. For example, the reference temperature may be approximately the weather temperature and may vary depending on the climate where the battery operates. In example embodiments, the reference temperature may vary based on other conditions that changes the temperature of an immediate surroundings of the battery. For example, when the battery is used in an electric vehicle, the reference temperature may indicate a temperature of the chassis of the vehicle. In example embodiments, the reference temperature indicates the average temperature for all the battery cells and by using the threshold, an outlier battery cell with a temperature higher than the rest of the battery cells in the battery pack may be detected. For example, the reference temperature is between any of -20°F to 340°F. In example embodiments, the threshold may be between any of 5°F to 150°F, 10°F to 120°F, 15°F to 100°F, 20°F to 90°F, 30°F to 90°F, 40°F to 80°F, 50°F to 70°F, etc. For example, the threshold may be approximately 10°F, 15°F, 20°F, 25°F, 40°F, 50°F, 60°F, 70°F, 80°F, 90°F, 100°F, etc.

In various embodiments, the threshold temperature may vary based on the reference temperature. For example, when the reference temperature reduces, a higher threshold may be used and when the reference temperature rises, a lower threshold may be used.

In various embodiments, the temperature of the battery cells are determines using the temperature value of groups of pixels corresponding to the battery cells. In various embodiments, the controller is configured to monitor the temperature values of the various pixels and/or pixel groups of the IR sensor 304. When a temperature values of a pixel group rises above a reference temperature by a threshold, the controller determines a location of the battery cell corresponding to the pixel group with the rise in the temperature value. In various embodiments, the controller determines the location of the battery cell in the battery pack using a location of the corresponding group of pixels in the pixels of the IR sensor.

In various embodiments, the system 400 includes a source 406 of a heat generating radiation configured to generate a heat generating radiation. For example, the heat generating radiation may include any of a xenon flash, laser, and/or thermal radiations such as infrared radiation.

In example embodiments, when a battery cell temperature rises above the reference temperature by the reference value, it should be disconnected from the power grid to prevent thermal runaway. In example embodiments, a battery cell temperature may rise above the reference temperature by the threshold however a temperature of the corresponding fuse may not rise above the cutoff temperature for the fuse, hence the battery cell may not be cut off from the power grid. In various embodiments, the system 400 is configured to use the heat generating radiation to further increase the temperature of the fuse such that it passed the cutoff temperature of the fuse and disconnect the battery cell from the power grid.

In various embodiments, the controller 402 is configured to determine a power level for the heat generating radiation. In various embodiments, the power level is determined such that the heat generated by the heat generating radiation is sufficient to increase the temperature of the fuse to the cutoff temperature of the fuse.

In various embodiments, the controller 402 is configured to direct the source 406 of the heat generating radiation to the battery cell with the temperature risen above the reference temperature by the threshold. In various embodiments, the controller 402 is configured to instruct the source 406 to emit the heat generating radiation at the power level, such that when a fuse of the battery cell receives the heat generating radiation, the fuse disconnects the battery cell from a power grid of the battery pack. In example embodiments, by disconnecting the battery cell from a power grid of the battery pack, the temperature of the battery cell may drop back to the reference and/or ambient temperature and a thermal runaway in the battery pack may be avoided.

In various embodiments, a power level of the heat generating radiation may be controlled using a current supplied to the source of the heat generating element. For example, when the heat generating radiation is a xenon flash, the power of the xenon flash may be controlled using the current supplied to the xenon flash.

In various embodiments, the source 406 of the heat generating radiation is configured to be directed to any of the battery cells in the battery pack by rotating. In various embodiments, the source 406 is configured to rotate across a first source axis 452 and a second source axis 454. The first source axis 452 may be approximately perpendicular to the second source axis and the first and second source axes are approximately parallel to the surface of the battery pack 422. In example embodiments, by rotating around the first and second source axes, the heat generating radiation of the source 406 may be directed to and/or scanned across the two-dimensional surface of the battery pack 422 facing the source 406. In various embodiments, the controller 402 is configured to direct the heat generating radiation to the battery cell with the temperature risen above the threshold by causing the source to rotate around the first or second axes such that the fuse of the battery cell received most of the heat generating radiation from the source 406. In various embodiments, the source is directed such that only the fuse of the battery cell with the risen temperature above the threshold receives the substantial amount of the heat generating radiation and/or such that only a temperature of that particular fuse among the fuses of the battery pack rises above the fuse cutoff temperature.

In various embodiments, the source 406 is configured to be directed to any of the battery cells in the battery pack by moving in a two-dimensional plane parallel to the surface of the battery pack. For example, by moving above and/or in proximity of the fuse of the battery cell with the temperature risen above the threshold, the source 406 may direct a majority of the heat generating radiation to the fuse of the battery cell and rise the temperature of only that fuse to the cutoff temperature.

In various embodiments, the source 406 is configured to move towards and away from the surface of the battery pack. For example, when the source 406 has directed its radiation to a specific fuse, the source 406 may be moved closer to the surface of the battery pack. In example embodiments, by moving the source 406 closer to the battery pack less amount of heat radiation energy may be used for increasing a temperature of the fuse, and/or it may be less likely that the heat generating radiation cause a temperature of any other fuse to rise above the cutoff threshold.

In various embodiments, the source 406 may include a focusing element, such as a lens, configured to focus the heat generating radiation to the fuse. In various embodiments, a redirecting element, such as a lens, a refractive element, a diffractive element, a waveguide, etc. may be used to direct the heat generating radiation to the battery cell. In various embodiments, the redirecting element may be movable to direct the heat generating radiation to the fuse. In various embodiments, any of the movements described above, or any combination of the movements described above for the source 406 and/or the redirecting element may be used to direct the heat generating radiation to the fuse.

In various embodiments, the system 400 may include a source movement mechanism 450 configured to move the source 406 and/or the redirecting element. In example embodiments, the source movement mechanism 450 may be any of a rotary motor, stepper motor, linear motor, servo motor, MEMS device, and/or any other mechanism for moving and/or rotating the source 406. In various embodiments, the controller 402 is configured to control the source movement mechanism 450.

In various embodiments, the source 406 may direct the heat generating radiation to the fuse using beam forming. For example, the source 406 may use phase array to direct most of the heat generating radiation energy to the fuse. In various embodiments, the source 406 may use beam forming to direct a main lobe of the heat generating radiation to the fuse. In various embodiments, the controller 402 is configured to control the beam forming of the source 406.

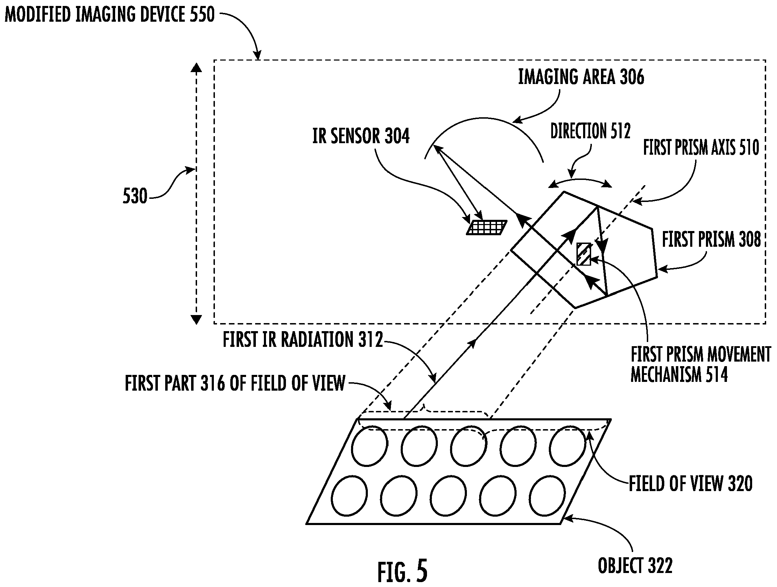

Referring now to FIG. 5 a schematic diagram illustrating a modified imaging device 302 is provided in accordance with various embodiments of the present disclosure. In various embodiments, the modified imaging device 550 includes an infrared sensor configured to sense reflected infrared radiation from an imaging area. In various embodiments, the modified imaging device includes the IR sensor 304 configured to sense a reflection of the first infrared radiation 312 from the imaging area 306.

In various embodiments, the modified imaging device includes the first prism 308 configured to receive the first infrared radiation 312 emitted from the object 322. In various embodiments, the first infrared radiation 312 is received from within the first part 316 of the field of view 320. In various embodiments, the first prism 308 is configured to reflect the first infrared radiation 312 to the imaging area 306.

In various embodiments, the placement and/or arrangement of the IR sensor and the imaging area is similar to the placement and/or arrangement shown and described with reference to FIG. 3. In various embodiments, the first prism 308 in the modified imaging device is configured to rotate in the direction 512 around a first prism axis parallel to the surface of the object facing the infrared sensor. In various embodiments, by rotating along the first prism axis, the first prism is configured to move the first part 316 of the field of view so that it scans the full filed of view 322 covering the entire surface of the object facing the infrared sensor. In various embodiments, by rotating along the first prism axis, the first prism forms an infrared image of the surface of the object on the imaging area. As previously described, in example embodiments, the object may be a battery pack.

In various embodiments, the modified imaging device 550 includes a first prism movement mechanism 514 configured to rotate the first prism in the direction 512. In various embodiments, the first prism movement mechanism 514 includes any of a motor and/or a micro electromechanical system (MEMS) configured to rotate the first prism to scan the entire field of view.

In various embodiments, with reference to FIG. 4A, the system 400 may include the modified imaging device 550 instead of the imaging device 302. In various embodiments, the controller 402 may be electronically coupled to the first prism movement mechanism 514 and control the rotation of the first prism 308 in the modified imaging device 550.

In example embodiments, using the first prism movement mechanism eliminates a need for using two prisms to receive IR radiation from the entire field of view 320 and it may provide for reduced weight and/or size of the modified imaging device 550.

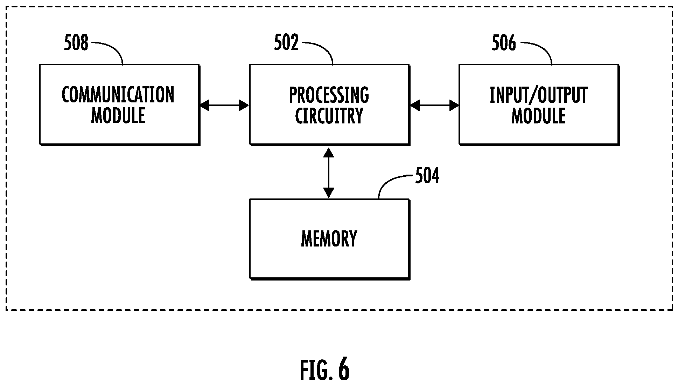

Referring now to FIG. 6, a schematic diagram depicting an example controller 402 of an example apparatus in electronic communication with various other components in accordance with various embodiments of the present disclosure is provided. For example, as described herein, the controller 402 may be in electronic communications with any of the IR sensor, movement mechanisms, heat generating radiation source, etc. As shown, the controller 402 comprises processing circuitry 502, a communication module 508, input/output module 506, a memory 504 and/or other components configured to perform various operations, procedures, functions or the like described herein.

In various embodiments, referring to Fig. 4A, the controller 402 (such as the processing circuitry 502, communication module 508, input/output module 506 and memory 504) is electrically coupled to and/or in electronic communication with any of the IR sensor, movement mechanisms, heat generating radiation source, etc. In various embodiments, any of the IR sensor, movement mechanisms, heat generating radiation source, etc., may exchange (e.g., transmit and receive) data with the processing circuitry 502 of the controller 402.

The processing circuitry 502 may be implemented as, for example, various devices comprising one or a plurality of microprocessors with accompanying digital signal processors; one or a plurality of processors without accompanying digital signal processors; one or a plurality of coprocessors; one or a plurality of multi-core processors; one or a plurality of controllers; processing circuits; one or a plurality of computers; and various other processing elements (including integrated circuits, such as ASICs or FPGAs, or a certain combination thereof). In some embodiments, the processing circuitry 502 may comprise one or more processors. In one exemplary embodiment, the processing circuitry 502 is configured to execute instructions stored in the memory 504 or otherwise accessible by the processing circuitry 502. When executed by the processing circuitry 502, these instructions may enable the controller 402 to execute one or a plurality of the functions as described herein. No matter whether it is configured by hardware, firmware/software methods, or a combination thereof, the processing circuitry 502 may comprise entities capable of executing operations according to the embodiments of the present invention when correspondingly configured. Therefore, for example, when the processing circuitry 502 is implemented as an ASIC, an FPGA, or the like, the processing circuitry 502 may comprise specially configured hardware for implementing one or a plurality of operations described herein. Alternatively, as another example, when the processing circuitry 502 is implemented as an actuator of instructions (such as those that may be stored in the memory 504), the instructions may specifically configure the processing circuitry 502 to execute one or a plurality of methods, algorithms and operations described herein, such as those discussed with reference to any of the figures herein.

The memory 504 may comprise, for example, a volatile memory, a non-volatile memory, or a certain combination thereof. Although illustrated as a single memory in FIG. 5, the memory 504 may comprise a plurality of memory components. In various embodiments, the memory 504 may comprise, for example, a hard disk drive, a random access memory, a cache memory, a flash memory, a Compact Disc Read-Only Memory (CD-ROM), a Digital Versatile Disk Read-Only Memory (DVD-ROM), an optical disk, a circuit configured to store information, or a certain combination thereof. The memory 504 may be configured to store information, data, application programs, instructions, and etc., so that the controller 402 can execute various functions according to the embodiments of the present disclosure. For example, in at least some embodiments, the memory 504 is configured to cache input data for processing by the processing circuitry 502. Additionally or alternatively, in at least some embodiments, the memory 504 is configured to store program instructions for execution by the processing circuitry 502. The memory 504 may store information in the form of static and/or dynamic information. When the functions are executed, the stored information may be stored and/or used by the controller 402.

The communication module 508 may be implemented as any apparatus included in a circuit, hardware, a computer program product or a combination thereof, which is configured to receive and/or transmit data from/to another component or apparatus. The computer program product comprises computer-readable program instructions stored on a computer-readable medium (for example, the memory 504) and executed by a controller 402 (for example, the processing circuitry 502). In some embodiments, the communication module 508 (as with other components discussed herein) may be at least partially implemented as the processing circuitry 502 or otherwise controlled by the processing circuitry 502. In this regard, the communication module 508 may communicate with the processing circuitry 502, for example, through a bus. The communication module 508 may comprise, for example, antennas, transmitters, receivers, transceivers, network interface cards and/or supporting hardware and/or firmware/software, and is used for establishing communication with another apparatus. The communication module 508 may be configured to receive and/or transmit any data that may be stored by the memory 504 by using any protocol that can be used for communication between apparatuses. The communication module 508 may additionally or alternatively communicate with the memory 504, the input/output module 506 and/or any other component of the controller 402, for example, through a bus.

In some embodiments, the controller 402 may comprise an input/output module 506. The input/output module 506 may communicate with the processing circuitry 502 to receive instructions input by the user and/or to provide audible, visual, mechanical or other outputs to the user. Therefore, the input/output module 506 may be in electronic communication with supporting devices, such as a keyboard, a mouse, a display, a touch screen display, and/or other input/output mechanisms. Alternatively, at least some aspects of the input/output module 506 may be implemented on a device used by the user to communicate with the controller 402. The input/output module 506 may communicate with the memory 504, the communication module 508 and/or any other component, for example, through a bus. One or a plurality of input/output modules and/or other components may be included in the controller 402.

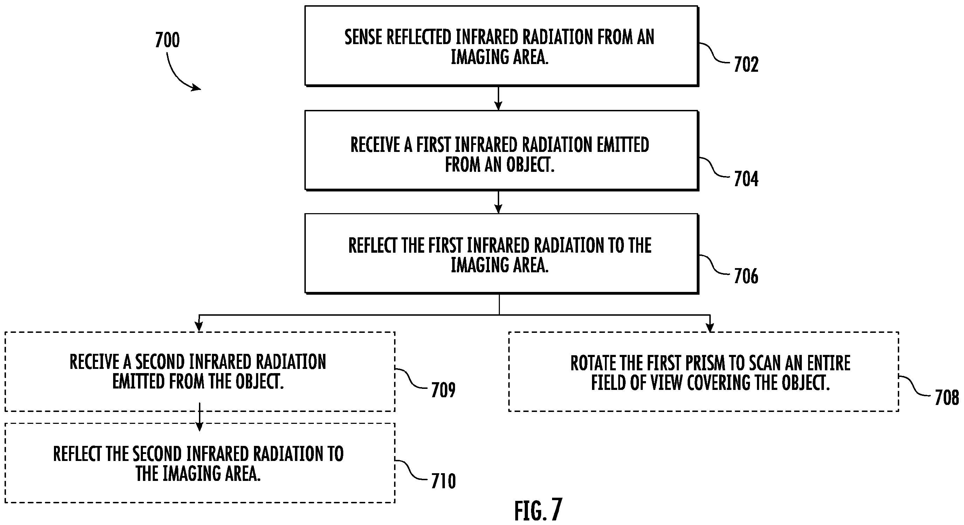

Referring now to FIG. 7, a flowchart diagrams illustrating a method 700, in accordance with various embodiments of the present disclosure are provided.

In example embodiments, various steps of the method 700 may be performed by an imaging system, for example the imaging system 302 or the modified imaging system 550 as described herein. In example embodiments, various steps of the method 700 may be performed by some of the components of the imaging systems as described herein. In example embodiments, various steps of the method 700 may be performed by a controller, for example controller 402. As noted above, the imaging systems may include or may be electronically coupled to the controller 402 described above in regard to FIG. 6 which may include processing circuitry 502, a communication module 508, an input/output module 506 and a memory 504. In some examples, the memory of the controller may store computer program instructions.

In various embodiments, at step 702, the method 700 senses reflected infrared radiation from an imaging area, for example imaging area 306. In various embodiments, the method 700 uses an IR sensor to sense reflected infrared radiation from an imaging area. In various embodiments, at step 702, the method 700 receives a first infrared radiation emitted from an object using a first prism, for example first prism 308. In various embodiments, the first infrared radiation is received from a first part of a field of view. In various embodiments, at step 704, the first prism reflects the first infrared radiation to the imaging area.

In various embodiments, for example with reference to FIG. 5, at step 708, the method 700 rotates the first prism to scan the entire field of view. In various embodiments, the field of view covers a surface of the entire object facing the infrared sensor. In various embodiments the first prism is configured to rotate along an axis parallel to the surface of the object facing the infrared sensor and form an infrared image of the surface of the object on the imaging area.

In various embodiments, for example with reference to FIG. 3, at step 709 the method 700 is configured to receive a second infrared radiation emitted from the object. In various embodiments, the method 700 uses a second prism to receive a second infrared radiation emitted from the object. In various embodiments, the second infrared radiation is received from a second part of the field of view. In various embodiments, the first part of the field of view and the second part of the field of view cover a surface of the entire object facing the infrared sensor.

In various embodiments, at step 710, the method 700 is configured to reflect the second infrared radiation to the imaging area. For example, the method 700 uses the second prism to reflect the second infrared radiation to the imaging area.

In various embodiments, using step 708, the method 700 uses the rotating first prism to form an infrared image of the surface of the object on the imaging area. In various embodiments, using steps 709 and 710, the method 700 uses the first prism and the second prism to form an infrared image of the surface of the object on the imaging area. In various embodiments, the object is a battery pack of an electrical vehicle.

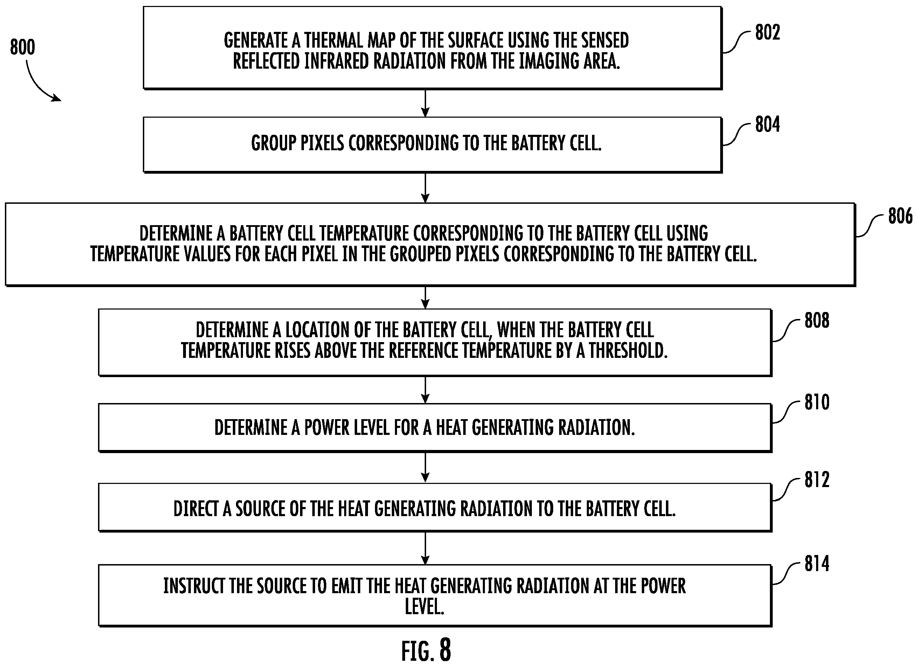

Referring now to FIG. 8, a flowchart diagrams illustrating a method 800, in accordance with various embodiments of the present disclosure are provided.

In example embodiments, various steps of the method 800 may be performed by an imaging system, for example the imaging system 302 or the modified imaging system 550 as described herein. In example embodiments, various steps of the method 800 may be performed by some of the components of the imaging systems as described herein. In example embodiments, various steps of the method 800 may be performed by a controller, for example controller 402. As noted above, the imaging systems may include or may be electronically coupled to the controller 402 described above in regard to FIG. 6 which may include processing circuitry 502, a communication module 508, an input/output module 506 and a memory 504. In some examples, the memory of the controller may store computer program instructions.

In various embodiments, at step 802 the controller generates a thermal map of the surface of the object 322 using the sensed reflected infrared radiation from the imaging area. In various embodiments, the thermal map includes temperature value for each pixel of the infrared image. In various embodiments, the object is a battery pack of an electrical vehicle.

In various embodiments, at step 804, the controller groups pixels corresponding to each battery cell of the battery pack. In various embodiments, at step 806 the controller determines a battery cell temperature corresponding to the battery cell using temperature values for each pixel in the grouped pixels corresponding to the battery cell. In various embodiments, the field of view cover a reference area, wherein the reference area is configured to maintain a reference temperature approximately similar to a surrounding temperature of the battery pack.

In various embodiments, at step 808, the controller determines a location of the battery cell, when the battery cell temperature rises above the reference temperature by a threshold. In various embodiments, at step 810, the controller determines a power level for a heat generating radiation. In various embodiments, the controller determines the power level such that a temperature of a fuse electronically coupling the battery cell to a power grid of the battery pack rises to a fuse cutoff temperature.

In various embodiments, at step 812 the controller directs a source of the heat generating radiation to the battery cell. In various embodiments, at step 814, the controller instructs the source to emit the heat generating radiation at the power level, such that when a fuse of the battery cell receives the heat generating radiation, the fuse disconnects the battery cell from a power grid of the battery pack.

In some examples, one or more of the procedures and/or methods described herein, for example in FIG. 8 may be embodied by computer program instructions, which may be stored by a memory (such as a non-transitory memory) of a system employing an embodiment of the present disclosure and executed by a processing circuitry (such as a processor) of the system. These computer program instructions may direct the system to function in a particular manner, such that the instructions stored in the memory circuitry produce an article of manufacture, the execution of which implements the function specified in the flow diagram step/operation(s). Further, the system may comprise one or more other circuitries. Various circuitries of the system may be electronically coupled between and/or among each other to transmit and/or receive energy, data and/or information.

In some examples, embodiments may take the form of a computer program product on a non-transitory computer-readable storage medium storing computer-readable program instruction (e.g., computer software). Any suitable computer-readable storage medium may be utilized, including non-transitory hard disks, CD-ROMs, flash memory, optical storage devices, or magnetic storage devices.

Many modifications and other embodiments of the present disclosure set forth herein will come to mind to one skilled in the art to which these embodiments pertain having the benefit of the teachings presented in the foregoing descriptions and the associated drawings. Therefore, it is to be understood that the disclosure are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. An imaging device comprising:
an infrared sensor configured to sense reflected infrared radiation from an imaging area;
a first prism configured to:
receive a first infrared radiation emitted from an object, wherein the first infrared radiation is received from a first part of a field of view; and
reflect the first infrared radiation to the imaging area;
a second prism configured to:
receive a second infrared radiation emitted from the object, wherein the second infrared radiation is received from a second part of the field of view; and
reflect the second infrared radiation to the imaging area,
wherein the infrared sensor is located between the object and the imaging area.

2. The imaging device of claim 1, wherein:
the first part of the field of view and the second part of the field of view cover a surface of the entire object facing the infrared sensor; and
the first prism and the second prism are configured to form an infrared image of the surface of the object on the imaging area.

3. The imaging device of claim 2, comprising a controller configured to generate a thermal map of the surface using the sensed reflected infrared radiation from the imaging area, the thermal map comprising temperature value for each pixel of the infrared image, and wherein the object is a battery pack of an electrical vehicle, and the controller configured to, for each battery cell of the battery pack:
group pixels corresponding to the battery cell; and
determine a battery cell temperature corresponding to the battery cell using temperature values for each pixel in the grouped pixels corresponding to the battery cell;
the first part of the field of view and the second part of the field of view cover a reference area, wherein the reference area is configured to maintain a reference temperature approximately similar to a surrounding temperature of the battery pack; and
the controller is configured to determine a location of the battery cell, when the battery cell temperature rises above the reference temperature by a threshold.

4. The imaging device of claim 3, wherein the controller is configured to:
determine a power level for a heat generating radiation;
direct a source of the heat generating radiation to the battery cell;
instruct the source to emit the heat generating radiation at the power level, such that when a fuse of the battery cell receives the heat generating radiation, the fuse disconnects the battery cell from a power grid of the battery pack; and
the power level is determined such that the fuse temperature rises to a fuse cutoff temperature.

5. The imaging device of the claim 4, wherein the source is configured to rotate across a first source axis and a second source axis, wherein the first source axis is approximately perpendicular to the second source axis and the first and second source axes are approximately parallel to the surface of the battery pack, wherein directing the source to the battery cell comprises causing the source to rotate around the first or second axes.

6. The imaging device of claim 4, wherein the source is configured to move in two dimensions in a plane approximately parallel to the surface of the battery pack, wherein directing the source to the battery cell comprises moving the source in the plane to a proximity of the battery cell.

7. The imaging device of claim 4, wherein the heat generating radiation comprises any of laser and xenon flash.

8. A system for preventing a thermal runaway in a battery pack, the system comprising:
an infrared imaging device configured to generate a thermal map of battery cells of the battery pack, wherein the thermal map comprises temperature information for each battery cell of the battery pack;
a source of a heat generating radiation, the source configured to direct the heat generating radiation to any of the battery cells of the battery pack; and
a controller configured to:
determine a location of a battery cell when the battery cell temperature is above a reference temperature by a threshold; and
direct the source of the heat generating radiation to the battery cell.

9. The system of claim 8, wherein the controller is configured to:
determine a power level for a heat generating radiation; and
instruct the source to emit the heat generating radiation at the power level, such that when a fuse of the battery cell receives the heat generating radiation, the fuse disconnects the battery cell from a power grid of the battery pack.

10. The system of claim 9, wherein the power level is determined so that the fuse temperature rises to a fuse cutoff temperature.

11. The imaging device of the claim 8, wherein the source is configured to rotate across a first source axis and a second source axis, wherein the first source axis is approximately perpendicular to the second source axis and the first and second source axes are approximately parallel to a surface of the battery pack facing the infrared imaging device, wherein directing the source to the battery cell comprises causing the source to rotate around the first or second axes.

12. The imaging device of claim 8, wherein the source is configured to move in two dimensions in a plane approximately parallel to the surface of the battery pack, wherein directing the source to the battery cell comprises moving the source in the plane to a proximity of the battery cell.

13. The imaging device of claim 8, wherein the infrared imaging device comprises:
an infrared sensor configured to sense reflected infrared radiation from an imaging area;
a first prism configured to:
receive a first infrared radiation emitted from an object, wherein the first infrared radiation is received from a first part of a field of view; and
reflect the first infrared radiation to the imaging area;
a second prism configured to:
receive a second infrared radiation emitted from the object, wherein the second infrared radiation is received from a second part of the field of view; and
reflect the second infrared radiation to the imaging area,
wherein the infrared sensor is located between the object and the imaging area.

14. An imaging device comprising:
an infrared sensor configured to sense reflected infrared radiation from an imaging area;
a first prism configured to:
receive a first infrared radiation emitted from an object, wherein the first infrared radiation is received from within a field of view; and
reflect the first infrared radiation to the imaging area;
a micro electromechanical system (MEMS) configured to rotate the first prism to scan the entire field of view, wherein the field of view cover a surface of the entire object facing the infrared sensor.

15. The imaging device of claim 14, wherein the first prism is configured to rotate along an axis parallel to the surface of the object facing the infrared sensor and form an infrared image of the surface of the object on the imaging area.
